**Europäisches Patentamt**

(19) **European Patent Office**

**Office européen des brevets**

(11) Veröffentlichungsnummer: **0 068 045**
**B1**

(12) **EUROPÄISCHE PATENTSCHRIFT**

(45) Veröffentlichungstag der Patentschrift:
05.08.87

(21) Anmeldenummer: **81108713.9**

(22) Anmeldetag: **22.10.81**

(51) Int. Cl.⁴: **G 01 N 23/223**

(54) **Kristall-Röntgen-Sequenzspektrometer.**

(30) Priorität: **30.06.81 DE 3125803**

(43) Veröffentlichungstag der Anmeldung:
**05.01.83 Patentblatt 83/1**

(45) Bekanntmachung des Hinweises auf die Patenterteilung:
**05.08.87 Patentblatt 87/32**

(84) Benannte Vertragsstaaten:
**CH DE LI NL**

(73) Patentinhaber: **Siemens Aktiengesellschaft Berlin und München, Wittelsbacherplatz 2, D-8000 München 2 (DE)**

(72) Erfinder: **Göbel, Herbert, Dr.rer.nat., Dipl.-Phys., Goldschaggbogen 8, D-8000 München 83 (DE)**
Erfinder: **Köpl, Rupert, Steinkirchner Strasse 7, D-8000 München 71 (DE)**

(56) Entgegenhaltungen:
EP - A - 0 015 475
DE - A - 2 833 078
DE - A - 2 907 160
FR - A - 2 420 755
US - A - 3 079 499
US - A - 3 914 605

SCIENTIFIC INSTRUMENTS, Band 14, Nr. 1, Januar 1981, DORKING (GB): P. PATTISON u.a.: "Observation of x-ray Raman, Compton and plasmon scattering using a position sensitive proportional counter", Seiten 95-99
SCIENTIFIC INSTRUMENTS
METHODEN DER RÖNTGENSPEKTRALANALYSE, 1963, TEUBNER (DE). M. A. BLOKHIN: "Spektralzerlegung der Röntgenstrahlen", Seiten 133-213
Siemens Röntgen-Analysengeräte Katalog MP42 (1980)
Seiten 2/13 und 5/3

## Beschreibung

Die Erfindung betrifft ein Kristall-Röntgen-Sequenzspektrometer, wie es im Oberbegriff des Anspruchs 1 angegeben ist.

Derartige Kristall-Sequenz-Röntgenspektrometer sind z.B. in «Siemens-Röntgen-Analysengeräte Katalog MP 42 (1980)» beschrieben. Dabei wird im wesentlichen die von einer grossflächigen Probe ausgehende Fluoreszenzstrahlung an einem ebenen Analysatorkristall zur Beugung gebracht und die an einem ebenfalls grossflächigen Detektor nachgewiesene Strahlungsintensität als Funktion der Stellung (Winkel $\vartheta$) des Analysatorkristalls gemessen. Die Auflösung eines solchen Systems wird bestimmt durch den Öffnungswinkel (z.B. 0.1°) eines Soller-Kollimators zwischen Probe und Analysatorkristall. Die geometrische Ausbeutung der Messung ergibt sich als Produkt aus Probenfläche und Raumwinkel, hier also als Produkt einer grossen Fläche und einem sehr kleinen Raumwinkel. Der Detektoranordnung kommt dabei nur die Rolle zu, die gebeugten Röntgenquanten zu registrieren. Eine Information darüber, an welchem Ort der Detektorfläche die gebeugten Röntgenquanten auftreffen, ist hier ohne Bedeutung.

Bekannt ist auch ein Mehrkanal-Spektrometer (Siemens-Werbebroschüre MRS 400, Bestell-Nr. E6892/1007), bei welchem das Prinzip der «Seemann-Bohlin-Geometrie» Verwendung findet. Bei einem solchen Mehrkanal-Spektrometer wird für jedes zu analysierende Element ein fest eingestellter gekrümmter Analysatorkristall benutzt, welcher zusammen mit Blenden und einem zugehörigen Detektor je einen Kanal definiert. Da keine Teile bewegt werden müssen, ist hier der Strahlengang leicht evakuierbar, so dass Elemente bis zu sehr niedriger Ordnungszahl (Kohlenstoff) nachweisbar sind. Eintritts- und Austrittsspalt definieren den Strahlengang genau, so dass der Untergrund sehr niedrig gehalten werden kann. Die Strahlausbeute lässt sich hier proportional dem Produkt aus Eintrittsspalt und Strahldivergenz angeben, also einer kleinen Fläche und einem grossen Raumwinkel. Die Strahlausbeute dürfte bei dem Mehrkanal-Spektrometer etwa in der gleichen Grössenordnung wie beim herkömmlichen Sequenz-Röntgenspektrometer liegen.

Eine elegante Lösung zur sequentiellen Erfassung eines weiten Spektralbereichs ist das fokussierende Linearspektrometer, wie es im sogenannten «Scanner» zum Mehrkanalspektrum «Siemens MRS 400» verwirklicht wurde. Dabei kann mit einer festen Detektorspannung und einem festen Diskriminatorfenster gemessen werden, wodurch sowohl höhere Beugungsordnungen als auch unkorrelierte Streustrahlung ausgeschieden werden können.

Mit einem ortsauflösenden Detektor (PSD) ist es möglich, in einer fokussierenden Anordnung mehrere Elemente gleichzeitig zu erfassen. Ein Röntgenspektrometer mit ortsauflösendem Detektor und einem fokussierenden Analysatorkristall arbeitet also in einem begrenzten Wellenlängenbereich wie ein Mehrkanal-Spektrometer. Der Beugungswinkel $2\vartheta$ kann linear am Fokussierungskreis abgelesen werden. Dies wäre unmittelbar mit einem fotografischen Film, der um den Fokussierungskreis gelegt ist, oder mit einem ortsauflösenden Festkörperdetektor möglich, der tangential am Fokussierungskreis entlang geführt wird. Ein ortsauflösendes Gas-Proportionalzählrohr (PSPC) lässt jedoch keinen schrägen Strahleinfall zu, so dass sein Fenster stets senkrecht zur Kristallmitte ausgerichtet sein muss. Dies führt zwangsläufig zu einer Verletzung der Fokussierungseigenschaft und zu einer Verzerrung des Ortsmassstabes entlang des Zähldrahtes, wobei die Verzerrung proportional zur Entfernung Detektor/Kristallmitte ist. Bei einem Röntgenspektrometer mit ortsauflösendem Detektor mit einem fokussierenden Analysatorkristall ergeben sich günstige Verhältnisse für eine genaue Messung nur in einem begrenzten Winkelbereich um die Detektormitte. Dazu kommt noch, dass verschiedene Wellenlängen von verschiedenen Orten auf der Probe nachgewiesen werden.

E. Bruninx (Philips' Research Reports 32 (1977) 253–265 und Spectrochimica Acta 31B, (1976) 221–221) führte Versuche mit verschiedenen geometrischen Anordnungen bei einem solchen Röntgenspektrometer mit ortsauflösendem Detektor und einem fokussierenden Kristall durch, wobei ein feststehender PSD benachbarte Elemente im Wellenlängenbereich um 0.15 nm (CuKα) ohne Schwierigkeiten auflösen konnte. Im Vergleich zu den damit erzielten Ergebnissen schneidet jedoch ein energiedispersives Spektrometer besser ab, das zwar eine schlechtere Auflösung zeigt, dafür ein günstigeres Peak/Untergrundverhältnis und (wesentlich) höhere Ausbeuten liefert.

Der vorliegenden Erfindung liegt die Aufgabe zugrunde, ein Kristall-Röntgen-Sequenzspektrometer der eingangs genannten Art anzugeben, welches eine hohe Ausbeute, eine weitgehende Unterdrückung von Streustrahlung und eine Erhöhung der Messgeschwindigkeit in Kristall-Röntgenspektrometern ermöglicht.

Diese Aufgabe wird erfindungsgemäss durch ein Kristall-Röntgen-Sequenzspektrometer der eingangs genannten Art gelöst, welches das kennzeichnende Merkmal des Anspruchs 1 aufweist.

Das Prinzip des bewegten PSD erlaubt eine relativ enge Eingrenzung des detektierten Strahlenbündels, das dennoch um Grössenordnungen breiter als beim obengenannten «Scanner» gewählt werden kann, so dass die Defokussierung gering bleibt und eine weitgehende Reduzierung des Untergrunds möglich ist. Die Drehung des Analysatorkristalls führt zu einem sukzessiven Abtasten der gesamten Probenfläche.

Bei Verwendung eines fokussierenden (Johannsson-)Analysatorkristalls wird die für die Analyse erfasste Fluoreszenzstrahlung auf einen Fokussierungskreis (Seeman-Bohlin-Geometrie) abgebildet. Als ortsauflösender Detektor kann ein ortsauflösender Festkörperdetektor oder auch ein ortsauflösendes Proportionalzählrohr verwendet werden. Besonders günstig ist das Prinzip des kontinuierlich bewegten PSD (CPSD: H.E. Göbel in «Advances in X-ray Analysis 22, (1979) 255–265).

Wenn sowohl der Detektor als auch der Analysatorkristall gedreht werden und wenn dabei die Drehung des Detektors doppelt so gross ist wie die Drehung des Analysatorkristalles, wobei eine gleichzeitige Verschiebung des Detektors auf dem Fokussierungskreis gewährleistet, dass der Mittelpunkt des Detektors im Fokus bleibt, gelingt es, den gesamten Winkelbereich $2\vartheta$ von rund 20° bis 140° abzutasten und so einen weiten Wellenlängenbereich zu erfassen.

Weitere Ausgestaltungen der Erfindung ergeben sich aus den Unteransprüchen und aus der Darstellung eines Ausführungsbeispiels.

Wegen der fokussierenden Eigenschaft des Analysatorkristalles wird ein wesentlich grösserer Raumwinkel der emittierten Fluoreszenzstrahlung analysiert und die Probenfläche wird durch die Drehung des Kristalles sequentiell erfasst. Bei Verwendung des CPSD-Prinzips werden dabei gleiche Wellenlängen in die gleichen Kanäle aufsummiert, wodurch gegenüber einem herkömmlichen Kristall-Röntgen-Sequenzspektrometer ca. 10 bis 100 mal höhere Ausbeuten erzielt werden.

Die Erfindung ist in der Zeichnung deutlich dargestellt und wird im folgenden näher beschrieben.

Fig. 1 stellt das Messprinzip eines herkömmlichen Sequenz-Röntgenspektrometers dar.

Fig. 2 zeigt den Strahlengang in einem bekannten Mehrkanal-Spektrometer.

Fig. 3 zeigt die bekannte Arbeitsweise des «Scanner».

Fig. 4 zeigt den gleichzeitigen Nachweis zweier Wellenlängen mit einem PSD.

Fig. 5 zeigt eine erfindungsgemässe gekoppelte $\vartheta$-$2\vartheta$-Bewegung von Analysatorkristall und Detektor. Dabei ist der Strahlengang für eine bestimmte Wellenlänge gezeigt.

Fig. 6 stellt einige geometrische Überlegungen zur erfindungsgemässen gekoppelten $\vartheta$-$2\vartheta$-Bewegung dar.

Fig. 7 zeigt ein Schema der gekoppelten $\vartheta$-$2\vartheta$-Bewegung bei Seeman-Bohlin-Fokussierung.

Fig. 8 zeigt ein Blockschaltbild des elektronischen Aufbaues eines erfindungsgemässen Ausführungsbeispiels.

Fig. 9 zeigt die Schaltung für eine externe Steuerspannung zur Erzeugung eines kontinuierlich variablen Massstabes für die Ortsinformation.

Fig. 10 zeigt eine Wellenlängen-Skala für verschiedene Si-Netzebenen.

Fig. 11 zeigt ein erfindungsgemässes Blendensystem zur Unterdrückung des Untergrundes.

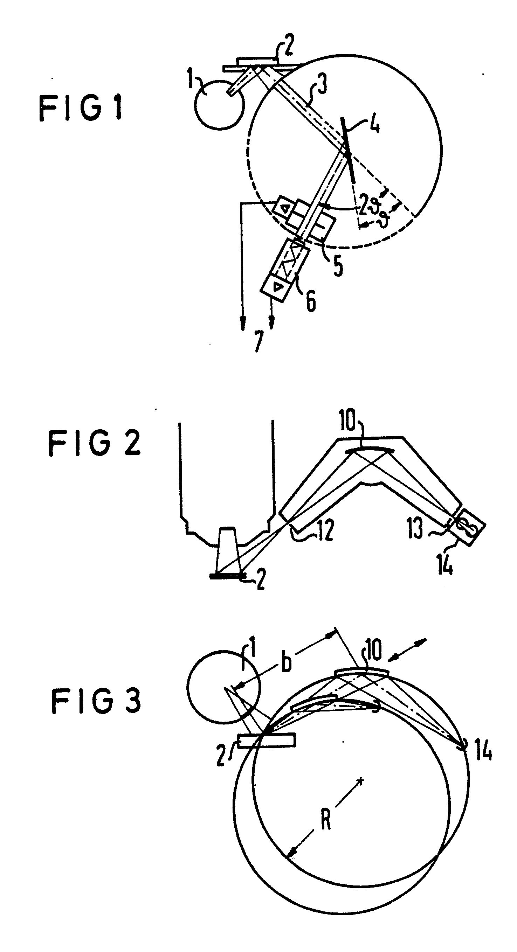

Fig. 1 stellt das Messprinzip eines herkömmlichen Sequenz-Röntgenspektrometers dar. Ein solches herkömmliches Sequenz-Röntgenspektrometer ist z.B. als Sequenz-Röntgenspektrometer SRS 200 in «Siemens-Röntgen-Analysengeräte» Katalog MP 42 (1980) beschrieben. Dabei fällt von einem Röntgenstrahler 1 Röntgenlicht auf eine Probe 2. Ein durch einen Kollimator 3 nahezu parallel ausgeblendetes Strahlenbündel fällt auf einen Analysatorkristall 4 und wird durch Beugung an den parallel zur Oberfläche liegenden Gitterebenen spektral zerlegt. Dabei gilt die Bragg'sche Gleichung:

$$n \cdot \lambda = 2d \cdot \sin\vartheta,$$

mit $n$ = Ordnung der Interferenz, $\lambda$ = Wellenlänge, $d$ = Netzebenenabstand und $\vartheta$ = Glanzwinkel.

Dreht sich der Analysatorkristall 4 in diesem Strahlenbündel, so gelangen nacheinander verschiedene Wellenlängen zur Beugung, so dass ein Histogramm der Intensität als Funktion von $\vartheta$ das von der Probe 2 emittierte Fluoreszenz-Röntgenspektrum wiedergibt. Das Durchflusszählrohr 5 und der Szintillationszähler 6 geben zusammen mit der Messelektronik die Möglichkeit einer (groben) Energieselektion der registrierten Quanten. Dadurch ist es möglich, mit einer gewünschten Interferenzordnung $n$ zu messen und den Einfluss von Streustrahlung auf ein Minimum zu reduzieren. Aus der Bragg-Gleichung ist ersichtlich, dass die Quantenenergien, welche proportional zu $1/\lambda$ sind, umgekehrt proportional zu $\sin\vartheta$ sind. Die Impulshöhen der in der Detektoranordnung registrierten Strahlung werden deshalb proportional zu $\sin\vartheta$ verstärkt («Sinusverstärker»). So ist es möglich, mit einer festen Detektorspannung und Diskriminatoreinstellung zu messen.

Fig. 2 zeigt den Strahlengang in einem bekannten Mehrkanal-Spektrometer. Da ein gekrümmter Analysatorkristall 10 in fokussierender Anordnung verwendet wird, kann der Kollimator von Fig. 1 durch Blenden 12, 13 ersetzt werden. Das von der Probe 2 emittierte Fluoreszenz-Röntgenspektrum wird nach Beugung am Analysatorkristall 10 im Detektor 14 registriert.

Fig. 3 zeigt die bekannte Arbeitsweise des «Scanner». Das von dem Röntgenstrahler 1 ausgehende Röntgenlicht fällt auf die Probe 2. Das von der Probe 2 emittierte Fluoreszenz-Röntgenspektrum wird am Analysatorkristall 10 gebeugt und vom Detektor 14 registriert. Mit einem fokussierenden Linear-Spektrometer, wie es im «Scanner» zum Mehrkanal-Spektrometer «Siemens MRS 400» verwirklicht ist, kann ein weiter Spektralbereich sequentiell erfasst werden. Mit einem «Scanner» gemäss Fig. 3 kann ein Winkelbereich von $30° \leq 2\vartheta \leq 120°$ erfasst werden. Dieses Linearspektrometer erhielt seinen Namen daher, dass ein linearer Zusammenhang zwischen der Wellenlänge $\lambda$ und einer geradlinigen Verschiebung $b$ (bei gleichzeitiger Drehung) des Analysatorkristalles 10 besteht. Analysatorkristall 10 und Detektor 14 werden so bewegt, dass bei gekoppelter $\vartheta$-$2\vartheta$-Drehung Probe 2 und Detektor 14 (bzw. Eintritts- und Austrittsblende) stets im Fokus bleiben.

Der Abstand der Probe 2 zum Analysatorkristall 10 ist $b$ mit

$$b = 2R \cdot \sin\vartheta,$$

wobei $R$ der Radius des Fokussierungskreises ist. Eliminiert man $\sin\vartheta$ aus dieser Gleichung mit Hilfe der Bragg-Gleichung, so erhält man

$$n \cdot \lambda = \frac{d}{R} \cdot b.$$

Die Wellenlänge λ ist also proportional zu b. Der Abstand b der Probe 2 zum Analysatorkristall 10 ist ein linearer Massstab für die Wellenlänge λ. Aus diesem Grund besitzt der «Scanner» einen Schrittmotor-Antrieb, der die Länge b linear verändert. Wie aus Fig. 3 ersichtlich, erfasst der Analysatorkristall 10 in jeder Stellung den gleichen Raumwinkel von der Probe 2.

Die Detektorimpulse werden so verstärkt, dass unabhängig von der Quantenenergie E gleiche Impulshöhen entstehen, d.h. wegen

$$E \sim \frac{1}{\lambda} \sim \frac{1}{b}$$

werden die Detektorimpulse mit einem Faktor proportional zu b moduliert («1/b-Verstärker»). So kann mit einer festen Detektorspannung und einem festen Diskriminatorfenster gemessen werden. Damit können sowohl höhere Beugungsordnungen als auch unkorrelierte Streustrahlung ausgeschieden werden.

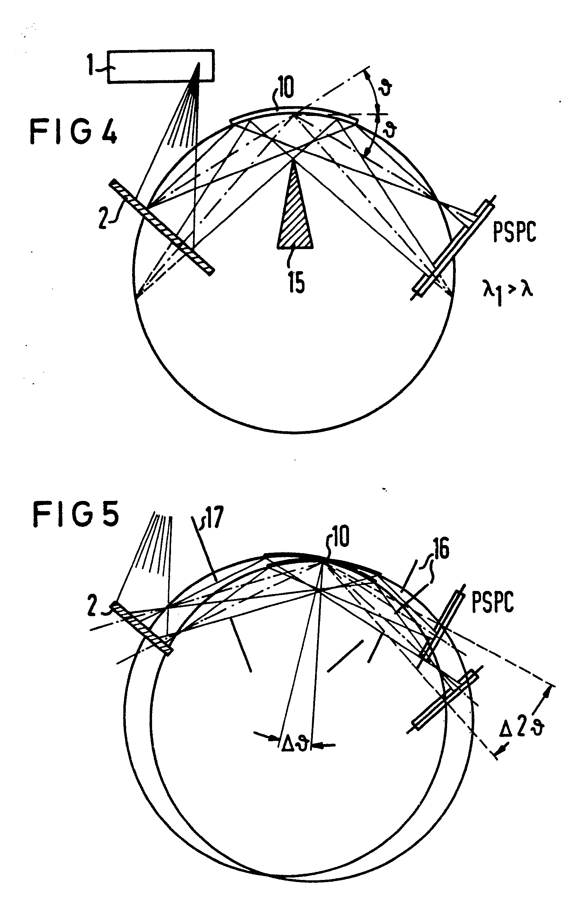

Fig. 4 zeigt den gleichzeitigen Nachweis zweier Wellenlängen mit einem ortsauflösenden Detektor (PSD). Mit einem ortsauflösenden Detektor (PSD) ist es möglich, in einer fokussierenden Anordnung mehrere Elemente gleichzeitig zu erfassen. Ein Röntgenspektrometer mit einem ortsauflösenden Detektor (PSD) arbeitet also in einem begrenzten Wellenlängenbereich wie ein Mehrkanal-Spektrometer. Das vom Röntgenstrahler 1 ausgehende Röntgenlicht trifft auf die Probe 2 auf. Das am Johannsson-Analysatorkristall 10 gebeugte Fluoreszenz-Röntgenspektrum trifft auf ein ortsauflösendes Gas-Proportionalzählror (PSPC) auf. Der Beugungswinkel 2ϑ kann grundsätzlich linear am Fokussierungskreis abgelesen werden. Das ortsauflösende Gas-Proportionalzählrohr (PSPC) lässt jedoch keinen schrägen Strahleinfall zu, so dass sein Fenster stets senkrecht zur Mitte des Analysatorkristalls 10 ausgerichtet sein muss. Dies führt zwangsläufig zu einer Verletzung der Fokussierungseigenschaft und zu einer Verzerrung des Ortsmassstabes entlang des Zähldrahtes proportional zur Entfernung des Detektors PSPC zur Mitte des Kristalls 10. Günstige Verhältnisse ergeben sich nur in einem begrenzten Winkelbereich um die Mitte des Detektors PSPC. Ausserdem werden verschiedene Wellenlängen von verschiedenen Orten auf der Probe 2 nachgewiesen. Die Schneidenblende 15 dient zur Unterdrükkung des Untergrundes.

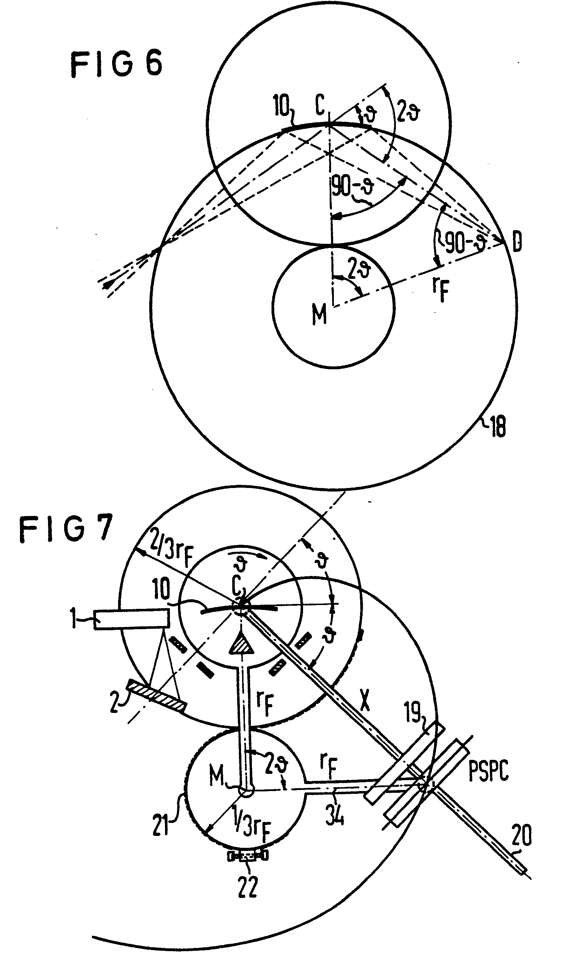

Fig. 5 zeigt eine erfindungsgemässe gekoppelte ϑ-2ϑ-Bewegung von Analysatorkristall 10 und Detektor PSPC. Dabei wird das Prinzip des kontinuierlich bewegten ortsauflösenden Detektors (PSD) verwendet, welches als CPSD-Prinzip bezeichnet wird (H.E. Göbel: Advances in X-ray Analysis 22 (1979), 255–265). Dieses CPSD-Prinzip erlaubt eine relativ enge Eingrenzung des detektierten Strahlenbündels, das dennoch um Grössenordnungen breiter als beim «Scanner» gewählt werden kann, so dass die Defokussierung gering bleibt und eine weitgehende Reduzierung des Untergrunds möglich ist. Die Drehung des Analysatorkristalls 10 führt zu einem sukzessiven Abtasten der gesamten Fläche der Probe 2. Fig. 5 zeigt den Strahlengang für eine konstante Wellenlänge bei zwei verschiedenen Stellungen des Kristalles 10. Der Detektor PSPC wurde dabei um den doppelten Winkel gedreht (ϑ-2ϑ-Bewegung) und gleichzeitig so auf dem Fokussierungskreis verschoben, dass der Mittelpunkt des Detektors PSPC im Fokus bleibt.

Damit beide am Analysatorkristall 10 gebeugten Strahlenbündel gleicher Wellenlänge in die gleichen Kanäle gezählt werden, muss das CPSD-Prinzip in einer modifizierten Form angewendet werden: Die Kanaladresse für den Beugungswinkel 2ϑ eines Röntgenquants ergibt sich wie bei der zitierten Arbeit von H.E. Göbel durch Addition der Adressen für die Winkelposition des PSD und den Einfallsort des Quants im Detektor PSD. Diese beiden Grössen, nämlich die Adresse für die Winkelposition des PSD und der Einfallsort des Quants im Detektor PSD, müssen linear und in gleichem Massstab, d.h. in Winkeleinheiten von 2ϑ, digitalisiert sein. Wie aus Fig. 5 ersichtlich ist, ändert sich die Entfernung des Kristalles 10 zum Detektor PSPC bei der Drehung, so dass der Winkelmassstab für den Einfallsort im Detektor PSPC nicht mehr konstant bleibt, sondern durch diese Entfernung geteilt werden muss. Wird statt eines ortsauflösenden Gas-Proportionalzählrohrs (PSPC) ein ortsauflösender Festkörperdetektor verwendet, so kann dieser Festkörperdetektor tangential am Fokussierungskreis entlanggeführt werden. Bei Verwendung eines solchen ortsauflösenden Festkörperdetektors könnte der Beugungswinkel 2ϑ direkt linear am Fokussierungskreis abgelesen werden.

Betrachtet man die geometrische Ausbeute eines erfindungsgemässen Verfahrens gemäss Fig. 5, so ergibt sich ein Wert, der proportional der vom Eintrittsfenster 17 freigegebenen Probenfläche multipliziert mit dem vom Kristall 10 erfassten Raumwinkel ist. Ein Verfahren gemäss Fig. 5 verbindet also die Vorzüge eines fokussierenden Verfahrens wie beim «Scanner» zum Mehrkanal-Spektrometer MRS 400 und der grossflächigen Analyse wie bei einem herkömmlichen Sequenz-Röntgenspektrometer und wird dadurch schneller bzw. empfindlicher als die bekannten Verfahren. Prinzipiell ist eine Erhöhung der Messgeschwindigkeit denkbar, die in der gleichen Grössenordnung wie bei den CPSD-Beugungsverfahren in der zitierten Arbeit von H.E. Göbel liegt, also ein Faktor 10 bis 100.

Fig. 6 stellt geometrische Überlegungen zur gekoppelten ϑ-2ϑ-Bewegung dar. Bei der Konstruktion eines erfindungsgemässen Spektrometers wird der Antrieb von ϑ (bzw. 2ϑ) linear gewählt, um eine möglichst einfache Anwendung des CPSD-Grundgedankens zu gewährleisten. Man kann also entweder einen Schrittmotor-Antrieb auf die Drehachse C des Kristalles 10 oder in die Mitte M des Fokussierungskreises 18 setzen. Eine Kopplung von ϑ und 2ϑ wid mechanisch durch die Abrollbewegung eines Kreises um M mit dem Radius $r_F/3$ auf einem feststehenden Kreis um C mit dem Radius $2/3 \cdot r_F$ durchgeführt, wobei C die $\vartheta$-Drehachse ist. Der Detektor D sieht dann stets den Kristallmittelpunkt C unter dem Winkel $2\vartheta$ zur Primärstrahlrichtung. Genausogut ist auch eine elektronische Kopplung über zwei Schrittmotor-Antriebe mit den Drehachsen C und M möglich.

Fig. 7 zeigt das Schema der gekoppelten $\vartheta$-$2\vartheta$-Bewegung bei Seeman-Bohlin-Fokussierung. Dabei wird die mechanische Kopplung von $\vartheta$ und $2\vartheta$ verwendet, wobei der Antrieb für die Drehung auf die nächststehende Drehachse C des Kristalls 10 gelegt ist. Als Antrieb für die Drehung wird ein spielfreies Einkreisgoniometer (Huber 410) mit einem 5-Phasen-Schrittmotor (Berger RDM 564/50) mit 1000 Schritten/Grad verwendet. Zur Ansteuerung des Antriebs dient eine rechnerkoppelbare Versorgungseinheit (Laser-Optronics SMC 500).

Um eine gleichmässige und vor allem spiel- und schlupffreie Rollbewegung des $2\vartheta$-Zylinders mit dem Mittelpunkt M auf dem festen Goniometerkreis mit dem Mittelpunkt C zu verwirklichen, werden zwei vorgespannte Federstahlbänder 21 S-förmig um die beiden Zylinderflächen gelegt, wobei sich die Federstahlbänder jeweils gegenläufig auf- bzw. abwickeln.

Eines der beiden Federstahlbänder 21 ist in Fig. 7 als punktierte Linie dargestellt. Die genaue $\vartheta$-$2\vartheta$-Justierung sowie das Spannen des Federstahlbandes 21 erfolgen anhand der angedeuteten Stellschrauben 22. Bei der zusammengesetzten $\vartheta$-$2\vartheta$-Bewegung beschreibt die Mitte des ortsauflösenden Gas-Proportionalzählrohrs PSPC eine spiralförmige Bahn.

In Fig. 7 ist ein Führungsarm 20 angedeutet, der um die Kristallmitte C drehbar gelagert ist. Auf ihm rollt ein Führungsschlitten, der den PSPC und einen Kollimator 19 trägt, und der mit dem $2\vartheta$-Arm 34 drehbar verbunden ist. Dadurch ist die Zähldrahtmitte des PSPC immer senkrecht auf die Kristallmitte C ausgerichtet, so dass die gebeugten Strahlen stets nahezu senkrecht in den Detektor fallen.

Wie im Zusammenhang mit Fig. 5 besprochen, muss die Entfernung x zwischen Zähldrahtmitte und Kristallmitte C bei der Digitalisierung des Einfallsorts eines Röntgenquants im PSPC berücksichtigt werden. Dies wird dadurch bewerkstelligt, dass x in ein elektrisches Signal umgewandelt wird, durch welches die Ortsinformation dividiert wird. Die einfachste Lösung hierfür bietet ein Weg-Messwertaufnehmer (Fa. Messring, München 40, Typ TU 150-K-1), der nach dem Prinzip einer induktiven Differentialdrossel mit einer Wechselstrom-Brückenschaltung arbeitet (Trägerfrequenz 5 kHz). Die Kerne der Serie TU sind in Längen von 150 mm bis 2000 mm lieferbar und haben eine Messgenauigkeit von 0.5%.

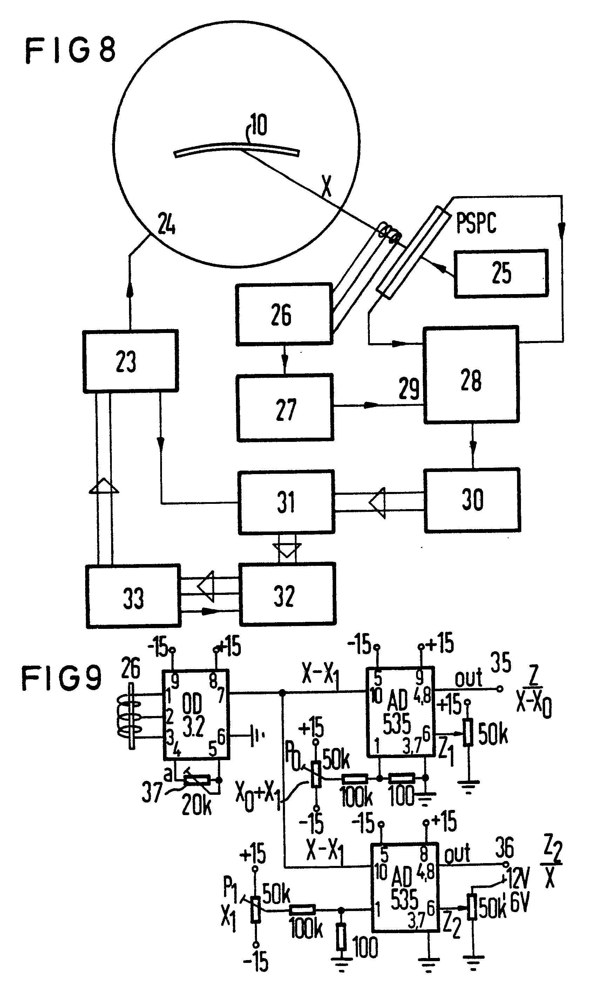

Fig. 8 zeigt ein Blockschaltbild des elektronischen Aufbaues für ein erfindungsgemässes Spektrometer. Die Anordnung entspricht voll dem CPSD-Grundgedanken, wie er in der zitierten Arbeit von H.E. Göbel angegeben ist, jedoch mit dem Zusatz eines kontinuierlich variablen Massstabes für die Ortsinformation (Einfallsort im PSPC) durch eine externe Steuerspannung. An einen Rechner 33 ist eine Versorgungseinheit 23 angekoppelt, welche den Schrittmotor-Antrieb 24 ansteuert. Die Detektorspannung wird über 25 geregelt. Die Entfernung x zwischen Zähldrahtmitte und Kristallmitte C wird mit Hilfe eines Weg-Messwertaufnehmers in ein elektrisches Signal umgewandelt. Da der in der zitierten Arbeit von H.E. Göbel verwendete Zeit-Digital-Konverter (TDC) einen zu geringen dynamischen Bereich zulässt (Faktor 2), wird der ursprüngliche langsamere Weg der Digitalisierung über eine Kombination Zeit-Amplituden-Konverter (TPC) 28/Analog-Digital-Konverter (ADC) 30 beschritten. Dazu wird ein modifizierter Kompakt-PSPC-Messkanal verwendet: Der Ausgangsverstärker des TPC wird so ausgelegt, dass die Amplituden proportional zu einer extern anliegenden Steuerspannung (Eingang 29) verstärkt werden. Die Steuerspannung kann zwischen 0 und 10 Volt liegen, wobei Frequenzen bis in den kHz-Bereich zulässig sind. In unserem Fall ist die Steuerspannung eine langsam veränderliche Gleichspannung. Die Steuerspannung wird im Baustein 27 erzeugt, welcher bei Fig. 9 näher beschrieben wird. Im Motor-Schrittzähler und Addierer 31 werden die Informationen von der Schrittmotor-Ansteuerung 23 und vom Analog-Digital-Konverter ADC 30 gesammelt und an den Vielkanal-Analysator 32 weitergegeben, von welchem sie schliesslich der Rechner 33 abrufen kann.

Fig. 9 zeigt eine Schaltung für eine externe Steuerspannung 35 zur Erzeugung eines kontinuierlich variablen Massstabes für die Ortsinformation und für eine externe Steuerspannung 36 zur Verschiebung des Diskriminatorfensters, so dass nur die gewünschte Beugungsordnung nachgewiesen wird. Der Baustein 27 ist mit dem induktiven Weg-Messwertaufnehmer 26 über einen integrierten Frequenzträger-Verstärker-Baustein verbunden (Fa. Messring, München 40, Typ OD-3.2), welcher die Länge x in eine elektrische Spannung $y = a \cdot (x-x_1)$ umwandelt. Die Verstärkung a ist über einen externen Widerstand 37 einstellbar, während die Nullpunkt-Verschiebung $x_1$ durch den mechanischen Aufbau vorgegeben ist. Diese Verschiebung $x_1$ muss zusammen mit der Verschiebung $x_0$ des Detektor-Nullpunkts aus der Detektormitte über das Potentiometer $P_0$ angepasst werden.

Das Steuersignal 35 am Eingang 29 des TPC muss umgekehrt proportional zur Länge x sein. Dafür wird ein analoger Dividier-Baustein (z.B. «Analog-Devices» Typ AD 535) eingesetzt. Dieser analoge Dividier-Baustein besitzt die Funktion

$$y = \frac{z}{x} - x_0,$$ wobei mit z die Höhe der Ausgangsspannung 35 eingestellt werden kann. Die Verstärkung a wird so eingestellt, dass zu keinem Zeitpunkt eine Übersteuerung möglich ist, und z wird schliesslich zur Erfüllung der CPSD-Bedingung so einjustiert, dass die gemessenen Spektrallinien unabhängig von der Bewegung des Detektors PSPC im Vielkanal-Spektrum stehenbleiben.

Wie bei den herkömmlichen Spektrometern ändert sich auch bei einem erfindungsgemässen Spektrometer die Quantenenergie und damit die Impulshöhe mit dem Bragg-Winkel $\vartheta$. Ähnlich wie beim «Scanner» ist die Quantenenergie dem Abstand x zwischen Kristallmitte C und der Zähldrahtmitte umgekehrt proportional. Mit einer ähnlichen Funktion

$$y' = \frac{z_2}{x},$$

die an einem zweiten Ausgang 36 dieses Steuermoduls 27 erzeugt werden kann, lässt sich das Diskriminatorfenster so verschieben, dass nur die gewünschte Beugungsordnung nachgewiesen wird.

Entscheidend für den Erfolg eines Spektrometers ist ein hohes Peak/Untergrundverhältnis. Während in die Peakhöhe die Linienbreite und die Strahlausbeute eingehen, kann der Untergrund durch Streuung des Primärstahls oder der emittierten Fluoreszenzstrahlung an Luft oder Bauteilen des Spektrometers in ungünstiger Weise erhöht werden. In einem System wie z.B. im «Scanner» zum Mehrkanal-Spektrometer MRS 400, wo nur eine Wellenlänge bei einer Stellung untersucht wird, sind diese Effekte durch Anbringung eines Eintritts- und Austrittsspalts im jeweiligen Fokus des Spektrometers (Fig. 2) auf einfache Weise vermeidbar. Der Strahlengang für die zu analysierende Wellenlänge wird sowohl durch $\vartheta$ als auch $2\vartheta$ genau vorgegeben, so dass die röntgenoptische Abbildungsqualität des Analysatorkristalls 10 (Rockingkurve) sich hauptsächlich in der Peakausbeute des Spektrometers niederschlägt, nur unwesentlich jedoch in der Auflösung.

Anders ist dies in einem offenen System, wie es der Betrieb mit ortsauflösendem Detektor erfordert. Hier hängt die Auflösung allein vom Analysatorkristall 10 ab. Mosaikstreuungen müssen unter der gewünschten Auflösung, d.h. unter wenigen 100stel Grad, liegen.

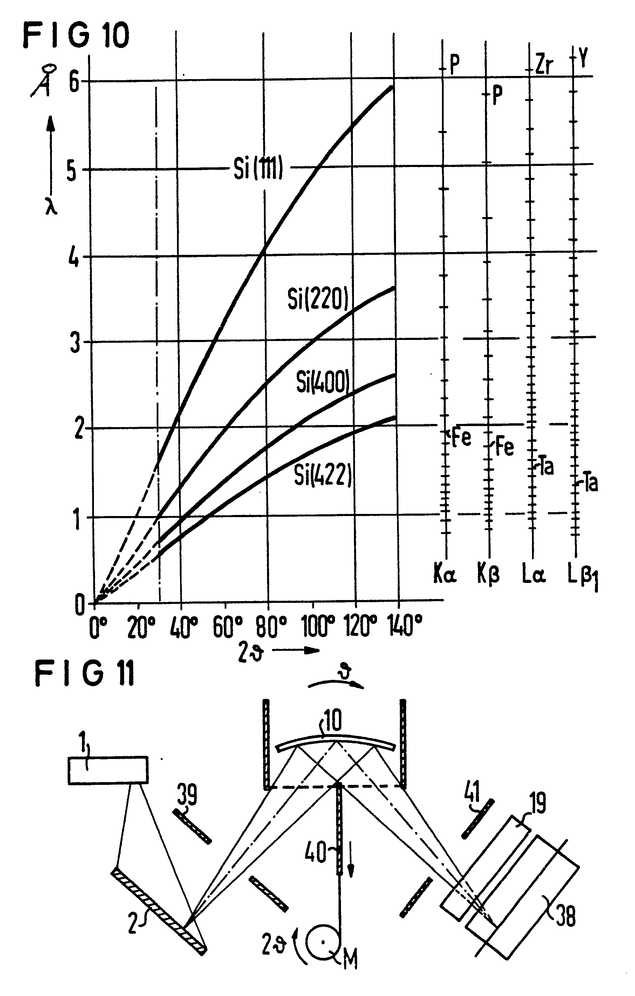

Als Analysatorkristalle 10 können z.B. Si-Analysatorkristalle verwendet werden. Dieses Material ist als Halbleiterwerkstoff in Form hochperfekter, bis zu 3 Zoll grosser Scheiben verfügbar (Orientierung 100, 110, 111). Man muss jedoch beachten, dass das Reflexionsvermögen um nahezu eine Grössenordnung geringer ist als bei den üblicherweise verwendeten Spektrometer-Kristallen. Zum Beispiel liefert der für harte Strahlung verwendete Si(400)-Reflex (d = 1.3576 Å) nur den sechsten Teil der Intensität des vergleichbaren Topas (303)-Reflexes. Bei Verwendung von LiF(110) kann eine weitere Verdoppelung der Ausbeute gegenüber Topas erwartet werden. Werden bei Si-Analysatorkristallen als reflektierende Netzebenen die Interferenzen (400) und (111) verwendet, so überdecken diese Kristalle zusammen in ihrer ersten Ordnung den Wellenlängenbereich von ca. 0.07 nm bis 0.6 nm, wenn man davon ausgeht, dass sich der auswertbare Winkelbereich des Spektrometers von $2\vartheta$ = 30° bis 140° erstreckt. Damit wären alle Elemente ab Ordnungszahl 15 (Phosphor) mit ihrer K- bzw. L-Strahlung erfassbar (Fig. 10).

Fig. 11 zeigt ein erfindungsgemässes Blendensystem zur Unterdrückung von Streustrahlung.

Der Untergrund durch Streustrahlung ist in einem offenen System schwierig in den Griff zu bekommen. Die CPSD-Methode lässt jedoch eine ziemlich genaue Definition des Strahlengangs zu, so dass durch ein entsprechendes Blendensystem eine weitgehende Unterdrückung des Untergrundes möglich ist. Der wesentliche Bestandteil dieses blendensystems ist eine bewegliche Dreifach-Schneidenblende 40, die so ausgelegt ist, dass der Kristall 10 in jeder Stellung optimal ausgeleuchtet ist und nur solche Strahlung den Detektor 38 erreichen, die am Kristall 10 gebeugt (bzw. gestreut) werden. Ein direkter Durchblick durch die drei gemeinsam bewegten Schneiden ist nicht möglich. Die Bewegung der Blende 40 ist mit der $\vartheta$-$2\vartheta$-Bewegung linear gekoppelt, wie dies in Fig. 11 angedeutet ist. Zusätzlich wird der Strahl durch ein Eintrittsfenster 39 und Austrittsfenster 41 begrenzt. Diese beiden Fenster 39, 41 sind symmetrisch zur Kristallachse angebracht. Sie haben die Aufgabe, die zu analysierende Probenfläche und den vom PSPC 38 zu erfassenden Winkelbereich zu definieren. Das Austrittsfenster 41 sollte etwas kleiner oder im Idealfall gleich dem Eintrittsfenster 39 gewählt werden. Es ist auch eine mit der $\vartheta$-$2\vartheta$-Bewegung gekoppelte variable Austrittsblende 41 denkbar. Schliesslich ist noch vor dem Detektor 38 ein Soller-Kollimator 19 angebracht, der nur solche Strahlen durchlässt, die etwa ($\pm 1°$) parallel zur Zeichenebene (Fig. 11) verlaufen.

In Testmessungen wurde als Analysatorkristall 10 für die harte Strahlung ein Si(400)-Kristall verwendet. Zur Anregung diente eine Feinstrukturröhre (FK 60–04 W) mit Wolfram-Anode, die mit 40 kV/30 mA betrieben wurde. Ein Cu-Blech sollte in einem mittleren Winkelbereich (60°–70°) einen Eindruck vom Peak/Untergrund-Verhältnis vermitteln. Bei einer Auflösung von rund 0.2° (Halbwertsbreite) liegt dabei die $K\alpha_1$-Linie etwa 500 mal höher als der Untergrund zwischen den $K\alpha$- und $K\beta$-Linien. Der Verlauf der Auflösung als Funktion des Beugungswinkels 2 wurde anhand einer $V_2A$-Stahlprobe (Elemente Cr bis Ni) im langwelligen Bereich und einer Probe, die die Elemente Ga, As und Zr enthielt, im kurzwelligen Bereich untersucht. Dabei wurde schon allein mit gebogenen Si-Wafern in der Johann-Näherung im langwelligen Bereich (grosse $2\vartheta$-Winkel) eine hervorragende Auflösung erzielt, so dass die Aufspaltung von $CrK\alpha_1$ und $CrK\alpha_2$ (Energiedifferenz 9.2 eV) deutlich erkennbar wird. Die Energieauflösung liegt hier (bei 5.41 keV) unter 5 eV.

Ein erfindungsgemässes Röntgenspektrometer wird speziell für die «Suche auf unbekannte Elemente» von Bedeutung sein, da die Methode stets ein komplettes Spektrogramm liefert. Durch die Abbildungseigenschaften des verwendeten fokussierenden Analysatorkristalles arbeitet die Methode wie ein «Raster-Sequenzspektrometer», das kontinuierlich die Probenfläche für jedes Element überstreicht, gleiche Wellenlängen jedoch in gleiche Kanäle aufsummiert. Bei Verwendung eines ortsauflösenden Festkörperdetektors, der tangential am Fokussierungskreis gefahren werden kann, kann mit einem konstanten Digitalisierungsmassstab beim Einfallsort im PSPC gearbeitet werden.

## Patentansprüche

1. Kristall-Röntgen-Sequenzspektrometer mit einem gekrümmten, fokussierenden Analysatorkristall (10) zur spektralen Zerlegung der von einer Probe (2) emittierten Röntgenstrahlung und einem beweglichen Detektor zum Nachweis der am Analysatorkristall (10) gebeugten Röntgenstrahlung, dadurch gekennzeichnet, dass der Detektor ein ortsauflösende Detektor (PSPC) ist.

2. Kristall-Röntgen-Sequenzspektrometer nach Anspruch 1, dadurch gekennzeichnet, dass der ortsauflösende Detektor (38) ein ortsauflösendes Proportionalzählrohr (PSPC) ist.

3. Kristall-Röntgen-Sequenzspektrometer nach Anspruch 2, gekennzeichnet durch ein kontinuier-lich bewegliches ortsauflösendes Proportional-zählrohr (PSPC).

4. Kristall-Röntgen-Sequenzspektrometer nach einem der Ansprüche 1 bis 3, dadurch gekennzeichnet, dass das detektierte Strahlenbündel relativ eng eingegrenzt ist.

5. Kristall-Röntgen-Sequenzspektrometer nach einem der Ansprüche 1 bis 4, dadurch gekennzeichnet, dass der Analysatorkristall (10) drehbar ist.

6. Kristall-Röntgen-Sequenzspektrometer nach Anspruch 5, dadurch gekennzeichnet, dass die Drehung des Detektors (38) doppelt so gross ist wie die Drehung des Analysatorkristalles (10), wobei eine gleichzeitige Verschiebung des Detektors (38) auf dem Fokussierungskreis gewährleistet, dass der Mittelpunkt des Detektors (38) im Fokus bleibt.

7. Kristall-Röntgen-Sequenzspektrometer nach Anspruch 6, dadurch gekennzeichnet, dass Strahlbündel gleicher Wellenlänge in gleiche Kanäle gezählt werden, wobei die Kanaladresse für einen gegebenen Beugungswinkel eines Röntgenquants sich durch Addition der Adressen für die Winkelposition des ortsauflösenden Detektors (38) und für den Einfallsort des Röntgenquants im Detektor (38) ergibt.

8. Kristall-Röntgen-Sequenzspektrometer nach Anspruch 7, dadurch gekennzeichnet, dass die zu addierenden Adressen linear und im gleichen Massstab digitalisiert sind.

9. Kristall-Röntgen-Sequenzspektrometer nach Anspruch 7 oder 8, dadurch gekennzeichnet, dass der Winkelmassstab für den Einfallsort im Detektor (38) entsprechend der Entfernung (x) Analysatorkristall (10)/Detektor (38) korrigiert ist.

10. Kristall-Röntgen-Sequenzspektrometer nach einem der Ansprüche 6 bis 9, dadurch gekennzeichnet, dass der Antrieb (24) für die Drehungen linear ist.

11. Kristall-Röntgen-Sequenzspektrometer nach Anspruch 10, gekennzeichnet durch mindestens einen Schrittmotor-Antrieb.

12. Kristall-Röntgen-Sequenzspektrometer nach Anspruch 11, gekennzeichnet durch eine elektronische Kopplung zweier Schrittmotor-Antriebe.

13. Kristall-Röntgen-Sequenzspektrometer nach Anspruch 11, gekennzeichnet durch eine mechanische Kopplung der beiden Drehbewegungen.

14. Kristall-Röntgen-Sequenzspektrometer nach einem der Ansprüche 4 bis 13, gekennzeichnet durch eine bewegliche Dreifach-Schneidenblende (40).

15. Kristall-Röntgen-Sequenzspektrometer nach Anspruch 14, dadurch gekennzeichnet, dass die Bewegung der Dreifach-Schneidenblende (40) an die Bewegungen des Analysatorkristalles (10) und des Detektors (38) gekoppelt ist.

16. Kristall-Röntgen-Sequenzspektrometer nach einem der Ansprüche 4 bis 15, gekennzeichnet durch eine variable Austrittsblende (41).

17. Kristall-Röntgen-Sequenzspektrometer nach einem der Ansprüche 4 bis 16, gekennzeichnet durch einen Soller-Kollimator (19) zwischen einer Austrittsblende (41) und dem Detektor (38).

## Claims

1. A crystal x-ray sequence spectrometer comprising a curved, focussing analyser crystal (10) for the spectral dispersion of x-ray radiation emitted by a sample (2), and a mobile detector for detecting the x-ray radiation diffracted on the analyser crystal (10), characterised in that the detector is a position-sensitive detector (PSPC).

2. A crystal x-ray sequence spectrometer as claimed in Claim 1, characterised in that the position-sensitive detector (38) is a position-sensitive proportional counting tube (PSPC).

3. A crystal x-ray sequence spectrometer as claimed in Claim 2, characterised by a continuously mobile position-resolving proportional counting tube (PSPC).

4. A crystal x-ray sequence spectrometer as claimed in one of Claims 1 to 3, characterised in that the detected beam of radiation is relatively closely defined.

5. A crystal x-ray sequence spectrometer as claimed in one of Claims 1 to 4, characterised in that the analyser crystal (10) is rotatable.

6. A crystal x-ray sequence spectrometer as claimed in Claim 5, characterised in that the rotation of the detector (38) is twice as much as the rotation of the analyser crystal (10), where a simultaneous displacement of the detector (38) on the focussing circle ensures that the central point of the detector (38) remains in the focal point.

7. A crystal x-ray sequence spectrometer as claimed in Claim 6, characterised in that beams of radiation of the same wavelength are counted into similar channels, where the channel address for a given diffraction angle of an x-ray quantum is formed by the addition of the addresses for the angular position of the position-sensitive detector (38) and for the point of incidence of the x-ray quantum in the detector (38).

8. A crystal x-ray sequence spectrometer as claimed in Claim 7, characterised in that the addresses to be added are linearly digitized and on the same scale.

9. A crystal x-ray sequence spectrometer as claimed in Claim 7 or 8, characterised in that the angular measurement for the point of incidence in the detector (38) is corrected in accordance with the distance (x) analyser crystal (10)/detector (38).

10. A crystal x-ray sequence spectrometer as claimed in one of Claims 6 to 9, characterised in that the rotational drive (24) is linear.

11. A crystal x-ray sequence spectrometer as claimed in Claim 10, characterised by at least one driving stepping motor.

12. A crystal x-ray sequence spectrometer as claimed in Claim 11, characterised by an electronic coupling of two driving stepping motors.

13. A crystal x-ray sequence spectrometer as claimed in Claim 11, characterised by a mechanical coupling of the two rotary motions.

14. A crystal x-ray sequence spectrometer as claimed in one of Claims 4 to 13, characterised by a movable triple knife-edge diaphragm (40).

15. A crystal x-ray sequence spectrometer as claimed in Claim 14, characterised in that the movement of the triple knife-edge diaphragm (40) is coupled to the movements of the analyser crystal (10) and the detector (38).

16. A crystal x-ray sequence spectrometer as claimed in one of Claims 4 to 15, characterised by a variable exit diaphragm (41).

17. A crystal x-ray sequence spectrometer as claimed in one of Claims 4 to 16, characterised by a Soller collimator (19) between an exit diaphragm (41) and the detector (38).

**Revendications**

1. Spectromètre séquentiel à rayons X à cristal comportant un cristal analyseur courbe (10) produisant une focalisation et servant à réaliser la dissociation spectrale du rayonnement X émis par un échantillon (2) et un détecteur mobile servant à détecter le rayonnement X diffracté dans le cristal analyseur (10), caractérisé par le fait que le détecteur est un détecteur (PSPC) réalisant une résolution locale.

2. Spectromètre séquentiel à rayons X à cristal suivant la revendication 1, caractérisé par le fait que le détecteur (38) réalisant une résolution locale est un compteur proportionnel (PSPC) réalisant une résolution locale.

3. Spectromètre séquentiel à rayons X à cristal suivant la revendication 2, caractérisé par un compteur proportionnel (PSPC) réalisant une résolution locale et mobile de façon continue.

4. Spectromètre séquentiel à rayons X à cristal suivant l'une des revendications 1 à 3, caractérisé par le fait que le faisceau détecté de rayonnement est délimité d'une manière relativement étroite.

5. Spectromètre séquentiel à rayons X à cristal suivant l'une des revendications 1 à 4, caractérisé par le fait que le cristal analyseur (10) est rotatif.

6. Spectromètre séquentiel à rayons X à cristal suivant la revendication 5, caractérisé par le fait que la rotation du détecteur (38) est égale au double de la rotation du cristal analyseur (10), auquel cas un déplacement simultanément du détecteur (38) sur le cerlce de focalisation garantit que le centre du détecteur (38) reste au foyer.

7. Spectromètre séquentiel à rayons X à cristal suivant la revendication 6, caractérisé par le fait que des faisceaux de rayonnement de même longueur d'onde sont comptés dans des canaux identiques, auquel cas l'adresse du canal pour un angle donné de diffraction d'un quantum de rayonnement X est obtenue par addition de l'adresse relative à la position angulaire du rayonnement X (38) réalisant la résolution locale et de l'adresse relative au lieu d'incidence du quantum de rayonnement X dans le détecteur (38).

8. Spectromètre séquentiel à rayons X à cristal suivant la revendication 7, caractérisé par le fait que les adresses devant être additionnées sont numérisées linéairemênt et à la même échelle.

9. Spectromètre séquentiel à rayons X à cristal suivant la revendication 7 ou 8, caractérisé par le fait que l'échelle des angles pour le lieu d'incidence dans le détecteur (38) est corrigée conformément à la distance (x) dans le cristal analyseur (10)/le détecteur (38).

10. Spectromètre séquentiel à rayons X à cristal suivant l'une des revendications 6 à 9, caractérisé par le fait que le dispositif d'entraînement (24) pour les rotations est linéaire.

11. Spectromètre séquentiel à rayons X à cristal suivant la revendication 10, caractérisé par au moins un dispositif d'entraînement à moteur pas-à-pas.

12. Spectromètre séquentiel à rayons X à cristal suivant la revendication 11, caractérisé par un couplage électronique de deux dispositifs d'entraînement à moteur pas-à-pas.

13. Spectromètre séquentiel à rayons X à cristal suivant la revendication 11, caractérisé par un couplage mécanique des deux mouvements de rotation.

14. Spectromètre séquentiel à rayons X à cristal suivant l'une des revendications 4 à 13, caractérisé par un diaphragme à triple lame (40).

15. Spectromètre séquentiel à rayons X à cristal suivant la revendication 14, caractérisé par le fait que le déplacement du diaphragme à triple lame (40) est accouplé aux déplacements du cristal analyseur (10) et du détecteur (38).

16. Spectromètre séquentiel à rayons X à cristal suivant l'une des revendications 4 à 15, caractérisé par un diaphragme de sortie variable (41).

17. Spectromètre séquentiel à rayons X à cristal suivant l'une des revendications 4 à 16, caractérisé par un collimateur de Soller (19) disposé entre un diaphragme de sortie (41) et le détecteur (38).

FIG 1

FIG 2

FIG 3

FIG 4

FIG 5

FIG 6

FIG 7

# FIG 8

# FIG 9

# FIG 10

# FIG 11